# EUROPÄISCHE PATENTSCHRIFT

(11) **EP 1 151 015 B1**
(45) Veröffentlichungstag und Bekanntmachung des Hinweises auf die Patenterteilung: **29.05.2002**
(21) Anmeldenummer: 99948985.9
(22) Anmeldetag: 14.10.1999
(51) Int. Cl.: C08C 1/04, C08F 6/00

(54) **VERFAHREN ZUR MINDERUNG DER GERUCHSEMISSION WÄSSRIGER SCHUTZKOLLOID-STABILISIERTER VINYLAROMAT-1,3-DIEN-COPOLYMERISATDISPERSIONEN**
METHOD FOR THE REDUCTION OF ODOUR EMISSIONS OF AQUEOUS PROTECTIVE COLLOID-STABILISED AROMATIC VINYL-1,3-DIENE-COPOLYMER DISPERSIONS
PROCEDE POUR REDUIRE LES ODEURS DEGAGEES PAR DES DISPERSIONS AQUEUSES DE COPOLYMERES CONSTITUES D'UN AROMATIQUE VINYLIQUE ET DE 1,3-DIENE, STABILISES PAR DES COLLOIDES PROTECTEURS

(30) Priorität: 19.11.1998 DE 19853421
(43) Veröffentlichungstag der Anmeldung: 07.11.2001
(73) Patentinhaber: Wacker-Chemie GmbH, 81737 München (DE)
(72) Erfinder: MAYER, Theo, D-84387 Julbach (DE); BALL, Peter, D-84547 Emmerting (DE)
(74) Vertreter: Schuderer, Michael, Dr.
(86) Internationale Anmeldenummer: EP9907708
(87) Internationale Veröffentlichungsnummer: WO0031147

(56) Entgegenhaltungen:
- EP-A- 0 028 348
- DE-A- 19 728 997
- DE-A- 19 807 561

## Beschreibung

Die Erfindung betrifft ein Verfahren zur Minderung der Geruchsemission von wässrigen Schutzkolloid-stabilisierten Vinylaromat-1,3-Dien-Copolymerisatdispersionen sowie von Redispersionspulvern, die durch Trocknung derartiger Polymerisatdispersionen erhältlich sind.

Wässrige Polymerdispersionen auf der Basis von Vinylaromat-1,3-Dien-Copolymerisat-Dispersionen und daraus, in der Regel durch Sprühtrocknung hergestellte Redispersionspulver, finden vor allem im Baubereich als Vergütungsmittel in zementären und nicht-zementären, pulverförmigen Fertigmischungen Verwendung. Ein Problem derartiger Dispersionen und Redispersionspulver besteht darin, daß sie in der Regel noch flüchtige geruchsintensive Bestandteile wie z.B. Mercaptane, die als Molekulargewichtsregler bei der Polymerisation dienen, Ammoniak, der zur Neutralisation verwendet wird, Restmonomere, nicht-polymerisierbare Verunreinigungen der Monomere, flüchtige Reaktionsprodukte der Monomere, die unter den Reaktionsbedingungen gebildet werden, sowie flüchtige Abbauprodukte der Polymere enthalten. Der resultierende Geruch wird sowohl von den Herstellern, als auch von den Verbrauchern als unangenehm empfunden, weshalb ein Bedarf an desodorierten wässrigen Polymerdispersionen besteht.

Bekanntlich werden Polymerisatdispersionen durch physikalische oder chemische Nachbehandlung desodoriert. Als physikalische Verfahren sind beispielsweise destillative Verfahren, insbesondere die Wasserdampfdestillation, sowie das Abstreifen mit inerten Gasen zu nennen, wie sie beispielsweise in der EP-A 327006 erwähnt sind. Nachteilig an diesem Verfahren ist, daß viele Dispersionen für diese Art der Desodorierung nicht hinreichend stabil sind, so daß Koagulatbildung auftritt, was eine aufwendige Filtration vor der weiteren Verwendung zur Folge hat. Ein weiterer Nachteil des Verfahrens ist, daß es zwar den Anteil an flüchtigen Stoffen in der wässrigen Polymerdispersion zu reduzieren vermag, jedoch die Frage der Entsorgung dieser Stoffe offen läßt.

Es ist auch bekannt, daß Polymerdispersionen durch chemische Nachbehandlung von geruchsintensiven Monomeren befreit werden können. Beispielsweise wird in der DE-A 4419518 beschrieben, daß durch radikalische Nachpolymerisation unter Einwirkung von Redoxinitiatorsystemen, chemisch die Absenkung der Restmonomere erfolgen kann. Die US-A 4529753 beschreibt ein Verfahren, womit der Gehalt an Restmonomeren von wässrigen Polymerisatdispersionen mittels nach Beendigung der Hauptpolymerisationsreaktion sich anschließender radikalischer Nachpolymerisation durch Einwirkung von besonderen radikalischen Redoxinitiatorsystemen reduziert werden kann. Solche Redoxinitiatorsysteme umfassen wenigstens ein Oxidationsmittel, wenigstens ein Reduktionsmittel sowie ein oder mehrere in verschiedenen Wertigkeitsstufen auftretende Übergangsmetallionen.

Nachteilig an den oben empfohlenen Verfahren ist jedoch, daß sie angewendet in geruchsintensiven Polymerdispersionen wie beispielsweise Styrol-Butadien-Dispersionen zwar teilweise den Restmonomergehalt senken können, allerdings den durch Styrol und geruchsintensive Nebenprodukte, beispielsweise Mercaptane, nicht-polymerisierbare Verunreinigungen der Monomere, flüchtige Reaktionsprodukte der Monomere, flüchtige Abbauprodukte der Polymere, bedingten unangenehmen Geruch nicht wirksam zu mindern vermögen.

Die DE-A 19728997 beschreibt desodorierte wässrige Polymerdispersionen, die erhältlich sind durch Zugabe des Zinksalzes der Ricinolsäure und/oder des Zinksalzes der Abietinsäure bzw. analoger Harzsäuren und/oder weiterer Zinksalze anderer gesättigter oder ungesättigter hydroxylierter Fettsäuren mit 16 und mehr C-Atomen. Nachteilig an dieser Verfahrensweise ist jedoch, daß sie aufgrund zusätzlicher Elektrolytbelastung die Stabilität der wässrigen Polymerisatdispersion beeinträchtigt.

Die adsorbierende Wirkung von Adsorbenzien hinsichtlich flüchtiger organischer Substanzen ist bekannt. Die WO-A 98/11156 beschreibt ein Verfahren, wonach die Zugabe bereits geringer Mengen (0.1 bis 20 Gew.-% bezogen auf polymere Bestandteile der Dispersion) Aktivkohle in Polymerisatdispersionen die geruchsbildenden flüchtigen Verunreinigungen so stark zu binden mag, daß diese sowohl in den Polymerdispersionen als auch in den unter Verwendung der Polymerisatdispersionen hergestellten Erzeugnissen praktisch nicht mehr wahrgenommen wird. Nachteilig bei diesem Verfahren ist, daß für eine wirksame Geruchsminderung die Verweilzeit der Aktivkohle bis zu mehreren Stunden beträgt und anschließend in der Regel (insbesondere für pigmentierte Systeme, z.B. Dispersionsfarben) zur weiteren Verwendung die Dispersion gefiltert werden muß; dies ist sowohl aus ökonomischer Sicht als auch ökologischer Sicht von Nachteil, zumal die Frage der Entsorgung der abfiltrierten kontaminierten Aktivkohle offen bleibt.

Die EP-A 283348 betrifft ein Verfahren zur Entfernung von Restmonomer, das heißt nicht umgesetztem Acrilnitril aus Acrylnitrilpolymerdispersionen, mittels Nachpolymerisation durch Zugabe von beliebigen Monomeren, welche mit Acrylnitril copolymerisierbar sind. Im Unterschied dazu besteht bei der vorliegenden Anmeldung die Aufgabe auch die von nicht polymerisierbaren Geruchsträgern ausgehende Belastung zu minimieren.

Wässrige Schutzkolloid-stabilisierte Styrol-Butadien-Polymerdispersionen sind zweiphasige Systeme, die aus einer wässrigen Phase und einer Polymerphase bestehen. Den geruchsintensiven Bestandteilen stehen sowohl die dispergierten Polymerisatteilchen als auch das wässrige Dispergiermedium als möglicher Aufenthaltsort zur Verfügung. Zwischen diesen beiden Phasen stellt sich ein Verteilungsgleichgewicht ein. Der Nachteil der bekannten Methoden zur Absenkung des Anteils an flüchtigen Bestandteilen wässriger Polymerisatdispersionen besteht nun darin, daß sie im wesentlichen entweder nur das wässrige Dispergiermedium oder nur die Polymerisatteilchen erfassen. Das heißt, eine signifikante Gesamtabsenkung des Anteils an flüchtigen Bestandteilen der wässrigen Polymerisatdispersion wird im wesentlichen diffusionskontrolliert erfolgen (wiederholte Einstellung des Verteilungsgleichgewicht), worauf vermutlich die nicht befriedigende Geschwindigkeit der Absenkung des Anteils an flüchtigen Geruchsträger in wässrigen Polymerisatdispersionen bei Anwendung der bekannten Verfahren zurückgeführt werden kann.

Überraschenderweise wurde gefunden, daß eine Desodorierung sowohl der in der wässrigen Phase als auch der in der Polymerphase befindlichen Geruchsträger erfolgt, wenn gegen Ende der Hauptpolymerisation, dem Reaktionsgemisch Ester von ungesättigten Carbonsäuren zugegeben werden.

Gegenstand der Erfindung ist ein Verfahren zur Minderung der Geruchsemission wässriger Schutzkolloid-stabilisierter Vinylaromat-1,3-Dien-Copolymerisatdispersionen und daraus durch Trocknung erhältlicher Redispersionspulver durch Emulsionspolymerisation eines Gemisches enthaltend mindestens einen Vinylaromaten und mindestens ein 1,3-Dien in Gegenwart von einem oder mehreren Schutzkolloiden und gegebenenfalls Trocknung der damit erhaltenen Polymerdispersion, dadurch gekennzeichnet, daß gegen Ende der Polymerisation, wenn der Gesamtgehalt der wässrigen Polymerisatdispersion an freien Monomeren im Bereich > 0 bis ≤ 20 Gew.-% liegt, 0.01 bis 15.0 Gew.-% ein oder mehrere Monomere aus der Gruppe der verzweigten oder unverzweigten Alkylester mit 1 bis 8 C-Atomen im Alkylrest von einfach ungesättigten Mono- oder Dicarbonsäuren zugegeben werden, wobei die Angaben in Gew.-% jeweils auf den Polymerisatgehalt der Dispersion bezogen sind.

Bevorzugt werden die Alkylester der Acrylsäure, Methacrylsäure, Fumarsäure, Maleinsäure oder Itaconsäure, wie Methylmethacrylat, Methylacrylat, n-Butylmethacrylat, n-Butylacrylat, Ethylmethacrylat, Ethylacrylat, 2-Ethylhexylmethacrylat, 2-Ethylhexylacrylat, Di-iso-Propylfumarat, Diethylfumarat oder deren Mischungen zugegeben. Besonders bevorzugt ist n-Butylacrylat.

Die genannten Alkylester können als solche oder in wässriger Emulsion zugegeben werden. Die Zugabemenge beträgt bevorzugt 0.1 bis 5 Gew.-%, bezogen auf den Polymerisatgehalt der wässrigen Polymerdispersion. Die Zugabe erfolgt gegen Ende der Polymerisation, wenn der Gesamtgehalt der wässrigen Polymerisatdispersion an freien Monomeren im Bereich > 0 bis ≤ 20 Gew.-% liegt, oder anders ausgedrückt der Umsatz der gesamten eingesetzten Monomermenge im Bereich zwischen ≥ 80 % und < 100 % liegt. Vorzugsweise erfolgt die Zugabe, wenn der Gesamtgehalt der wässrigen Polymerisatdispersion an freien Monomeren, bezogen auf den Polymerisatgehalt der Dispersion, bis auf den Bereich 5 bis 15 Gew.-% abgesunken ist, was einem Umsatz von 85 bis 95 % entspricht. Nach der Zugabe der Alkylester wird die Polymerisation solange weitergeführt bis kein Monomerumsatz mehr zu erkennen ist.

Geeignete Vinylaromaten sind Styrol und Methylstyrol, vorzugsweise ist Styrol copolymerisiert. Beispiele für 1,3-Diene sind 1,3-Butadien und Isopren, bevorzugt wird 1,3-Butadien. Im allgemeinen enthalten die Copolymerisate 20 bis 80 Gew.-% Vinylaromat und 20 bis 80 Gew.-% 1,3-Dien, wobei gegebenenfalls noch weitere Monomere enthalten sein können, und sich die Angaben in Gewichtsprozent jeweils auf 100 Gew.-% aufaddieren.

Beispiele für weitere Monomere sind Vinylaromaten und 1,3-Dienen copolymerisierbare Monomere wie Ethylen, Vinylchlorid, (Meth) )acrylsäureester von Alkoholen mit 1 bis 15 C-Atomen oder Vinylester von unverzweigten oder verzweigten Carbonsäuren mit 1 bis 15 C-Atomen oder Hilfsmonomere wie ethylenisch ungesättigte Mono- und Dicarbonsäuren, ethylenisch ungesättigte Carbonsäureamide und -nitrile, Mono- und Diester der Fumarsäure und Maleinsäure, Maleinsäureanhydrid, ethylenisch ungesättigte Sulfonsäuren, mehrfach ethylenisch ungesättigte Comonomere oder nachvernetzende Comonomere, epoxidfunktionelle Comonomere, siliciumfunktionelle Comonomere, Monomere mit Hydroxyoder CO-Gruppen. Geeignete Comonomere und Hilfsmonomere sind beispielsweise in der PCT-Anmeldung PCT/EP98/06102 beschrieben, deren diesbezügliche Offenbarung Teil dieser Anmeldung sein soll.

Die Herstellung nach dem Emulsionspolymerisationsverfahren, erfolgt bei 40°C bis 100°C, vorzugsweise 60°C bis 90°C. Die Initiierung der Polymerisation erfolgt mit den für die Emulsionspolymerisation gebräuchlichen Initiatoren oder Redox-Initiator-Kombinationen, beispielsweise Hydroperoxide wie tert.-Butylhydroperoxid, Azoverbindungen wie Azobisisobutyronitril, anorganische Initiatoren wie die Natrium-, Kalium- und Ammoniumsalze der Peroxodischwefelsäure. Die genannten Initiatoren werden im allgemeinen in einer Menge von 0.05 bis 3 Gew.-%, bezogen auf das Gesamtgewicht der Monomere, eingesetzt. Als Redox-Initiatoren verwendet man Kombinationen aus den genannten Initiatoren in Kombination mit Reduktionsmitteln wie Natriumsulfit, Natriumhydroxymethansulfinat, Ascorbinsäure. Die Reduktionsmittelmenge beträgt vorzugsweise 0.01 bis 5.0 Gew.-%, bezogen auf das Gesamtgewicht der Monomere.

Die Stabilisierung des Polymerisationsansatzes erfolgt mittels Schutzkolloiden, vorzugsweise ohne zusätzliche Emulgatoren. Geeignete Schutzkolloide, sind vollverseifte und teilverseifte Polyvinylacetate. Geeignet sind auch teilverseifte, hydrophobierte Polyvinylacetate, wobei die Hydrophobierung beispielsweise durch Copolymerisation mit Isopropenylacetat, Ethylen oder Vinylestern von gesättigten alpha-verzweigten Monocarbonsäuren mit 5 bis 11 C-Atomen erfolgen kann. Weitere Beispiele sind Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)-acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere, Dextrine wie Gelbdextrin.

Bevorzugt werden die genannten teilverseiften Polyvinylacetate und teilverseiften, hydrophobierten Polyvinylacetate. Besonders bevorzugt werden teilverseifte Polyvinylacetate mit einem Hydrolysegrad von 80 bis 95 Mol%, und einer Höpplerviskosität (4 %-ige wässrige Lösung, DIN 53015, Methode nach Höppler bei 20°C) von 1 bis 30 mPas, vorzugsweise 2 bis 15 mPas.

Die Schutzkolloide werden im allgemeinen in einer Menge von insgesamt 1 bis 15 Gew.-%, bezogen auf das Gesamtgewicht der Monomere, bei der Polymerisation zugesetzt. Vorzugsweise wird der Schutzkolloid-Anteil dabei teilweise vorgelegt und teilweise nach Initiierung der Polymerisation zudosiert. Die Monomere können insgesamt vorgelegt werden, insgesamt zudosiert werden oder in Anteilen vorgelegt werden und der Rest nach der Initiierung der Polymerisation zudosiert werden. Ein geeignetes Herstellungsverfahren ist beispielsweise in der PCT-Anmeldung PCT/EP98/06102 beschrieben, deren diesbezügliche Offenbarung Teil dieser Anmeldung sein soll. Die damit erhältlichen wässrigen Dispersionen haben einen Feststoffgehalt von 30 bis 75 Gew.-%, vorzugsweise von 40 bis 65 Gew.-%.

Zur Herstellung der in Wasser redispergierbaren Polymerpulver werden die wässrigen Dispersionen getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zweioder Mehrstoffdüsen oder mit einer rotierenden Scheibe erfolgen kann. Die Austrittstemperatur wird im allgemeinen im Bereich von 55°C bis 100°C, bevorzugt 70°C bis 90°C, je nach Anlage, Tg des Harzes und gewünschtem Trocknungsgrad, gewählt. Die Verdüsung ist in der PCT-Anmeldung PCT/EP98/06102 beschrieben, deren diesbezügliche Offenbarung Teil dieser Anmeldung sein soll.

Überraschenderweise wurde gefunden, daß die Desodorierung der Geruchsemittenten sowohl in der wässrigen als auch in der Polymerphase der Dispersion stattfindet. Vorteilhafterweise reichen dennoch bereits geringe Mengen an Carboxylsäureester für eine desodorierende Wirkung aus, so daß die anwendungstechnischen Eigenschaften der wässrigen Polymerdispersion durch den Zusatz im allgemeinen nicht beeinträchtigt wird. Es wird ebenso weder die Stabilität der dispersiven Verteilung noch die Eignung der Dispersion für eine anschließende Sprühtrocknung beeinträchtigt.

Die Polymerdispersionen und die daraus durch Trocknung hergestellten Dispersionspulver mit verringerter Geruchsemission können in üblicher, dem Fachmann bekannten Weise zu technischen Produkten, wie z.B. als Rezepturbestandteil in Verbindung mit anorganischen, hydraulisch abbindenden Bindemitteln in Bauklebern, Putzen, Spachtelmassen, Fußbodenspachtelmassen, Fugenmörtel, Gips und Farben sowie als Alleinbindemittel für Beschichtungsmittel und Klebemittel sowie als Beschichtungsund Bindemittel für Textilien und Papier eingesetzt werden.

Die im folgenden aufgeführten Beispiele sollen die Erfindung veranschaulichen, ohne sie jedoch einzuschränken.

### Beispiel 1:

In einem Rührautoklaven mit ca. 16 l Inhalt wurden 3.41 l entionisiertes Wasser und 3.85 kg einer 20 Gew.-%igen wässrigen Lösung eines teilverseiften Polyvinylacetats mit einem Hydrolysegrad von 88 Mol%, einer Höpplerviskosität der 4 %-igen Lösung von 4 mPas (DIN 53015, Methode nach Höppler bei 20°C), vorgelegt. Der pH-Wert wurde mit 10 Gew.%-iger Ameisensäure auf 4.0 bis 4.2 eingestellt. Anschließend wurde evakuiert, mit Stickstoff gespült, erneut evakuiert und ein Gemisch aus 4.56 kg Styrol, 2.45 kg 1.3-Butadien und 48.1 g tert.-Dodecylmercaptan eingesaugt. Nach Aufheizen auf 80°C wurde die Polymerisation durch gleichzeitiges Einfahren von zwei Katalysatorlösungen gestartet, von denen die erste aus 197 g entionisiertem Wasser und 66 g einer 40 %-igen wässrigen tert.-Butylhydroperoxidlösung und die andere aus 508 g entionisiertem Wasser und 57 g Natriumformaldehydsulfoxylat bestand. Die Dosierung der Peroxidlösung erfolgte mit einer Zulaufgeschwindigkeit von 44 ml/h, die Natriumformaldehydsulfoxylat-Lösung wurde mit 94 ml/h zudosiert. 3.5 Stunden nach Polymerisationsbeginn waren die vorgelegten Monomere zu 87 % umgesetzt. Zu diesem Zeitpunkt begann die Dosierung von 315 g Butylacrylat mit einer Rate von 630 g/h. 2 Stunden nach Beendigung der Butylacrylatdosierung wurden die Initiatordosierungen gestoppt, der Reaktorinhalt auf 50°C abgekühlt und noch eine Stunde im Vakuum gerührt.

Man erhielt eine stabile, koagulatfreie Dispersion mit einer mittleren Teilchengröße (Gewichtsmittel) von 490 nm, die bei einem Festkörpergehalt von 49.3 % eine Viskosität (Brookfield-Viskosimeter, 20°C, 20 Upm) von 3200 mPas aufwies.

400 Gew.-Teile der Dispersion wurden mit 200 Gew.-Teilen einer 10.3 Gew.%-igen Lösung eines Polyvinylalkohols (teilverseiftes Polyvinylacetat, Hydrolysegrad 88 Mol%, Viskosität der 4 %igen Lösung 13 mPas), 0.84 Gew.-Teilen Entschäumer und 135 Gew.-Teilen Wasser versetzt und gründlich gemischt. Die Dispersion wurde durch eine Zweistoffdüse versprüht. Als Verdüsungskomponente diente auf 4 bar vorgepreßte Luft, die gebildeten Tropfen wurden mit auf 125°C erhitzter Luft im Gleichstrom getrocknet.

Das erhaltene trockene Pulver wurde mit 10 % handelsüblichem Antiblockmittel (Gemisch aus Calcium-Magnesium-Carbonat und Magnesiumhydrosilikat) versetzt.

### Beispiel 2:

Die Herstellung der Dispersion erfolgte analog Beispiel 1, wobei 3.5 Stunden nach Polymerisationsbeginn (87 % Monomerumsatz) 315 g Methylacrylat (anstatt Butylacrylat) innerhalb 30 min zudosiert wurden.

Man erhielt eine stabile, koagulatfreie Dispersion mit einer mittleren Teilchengröße (Gewichtsmittel) von 512 nm, die bei einem Festkörpergehalt von 50.2 % eine Viskosität (Brookfield-Viskosimeter, 20°C, 20 Upm) von 2750 mPas aufwies.

Alle anderen Maßnahmen zur Herstellung des Dispersionspulvers entsprachen Beispiel 1.

### Beispiel 3:

Die Herstellung der Dispersion erfolgte analog Beispiel 1, wobei 3.5 Stunden nach Polymerisationsbeginn (87 % Monomerumsatz) 315 g Ethylacrylat (anstatt Butylacrylat) innerhalb 30 min zudosiert wurden.

Man erhielt eine stabile, koagulatfreie Dispersion mit einer mittleren Teilchengröße (Gewichtsmittel) von 550 nm, die bei einem Festkörpergehalt von 50.9 % eine Viskosität (Brookfield-Viskosimeter, 20°C, 20 Upm) von 3950 mPas aufwies.

Alle anderen Maßnahmen zur Herstellung des Dispersionspulvers entsprachen Beispiel 1.

### Beispiel 4:

Die Herstellung der Dispersion erfolgte analog Beispiel 1, wobei 3.5 Stunden nach Polymerisationsbeginn (87 % Monomerumsatz) 315 g 2-Ethylhexylacrylat (anstatt Butylacrylat) innerhalb 30 min zudosiert wurden.

Man erhielt eine stabile, koagulatfreie Dispersion mit einer mittleren Teilchengröße (Gewichtsmittel) von 635 nm, die bei einem Festkörpergehalt von 51.6 % eine Viskosität (Brookfield-Viskosimeter, 20°C, 20 Upm) von 3750 mPas aufwies.

Alle anderen Maßnahmen zur Herstellung des Dispersionspulvers entsprachen Beispiel 1.

### Beispiel 5:

Die Herstellung der Dispersion erfolgte analog Beispiel 1, wobei 3.5 Stunden nach Polymerisationsbeginn (87 % Monomerumsatz) 315 g Methylmethacrylat (anstatt Butylacrylat) innerhalb 30 min zudosiert wurden.

Man erhielt eine stabile, koagulatfreie Dispersion mit einer mittleren Teilchengröße (Gewichtsmittel) von 489 nm, die bei einem Festkörpergehalt von 52.5 % eine Viskosität (Brookfield-Viskosimeter, 20°C, 20 Upm) von 6450 mPas aufwies.

Alle anderen Maßnahmen zur Herstellung des Dispersionspulvers entsprachen Beispiel 1.

### Vergleichsbeispiel 6:

Die Herstellung der Dispersion erfolgte analog Beispiel 1, wobei 3.5 Stunden nach Polymerisationsbeginn (87 % Monomerumsatz) 315 g Acrylsäure (anstatt Butylacrylat) innerhalb 30 min zudosiert wurden.

Man erhielt eine stabile, koagulatfreie Dispersion mit einer mittleren Teilchengröße (Gewichtsmittel) von 946 nm, die bei einem Festkörpergehalt von 50.5 % eine Viskosität (Brookfield-Viskosimeter, 20°C, 20 Upm) von 1930 mPas aufwies.

Alle anderen Maßnahmen zur Herstellung des Dispersionspulvers entsprachen Beispiel 1.

### Vergleichsbeispiel 7:

Die Herstellung der Dispersion erfolgte analog Beispiel 1, wobei 3.5 Stunden nach Polymerisationsbeginn (87 % Monomerumsatz) 315 g Methacrylsäure (anstatt Butylacrylat) innerhalb 30 min zudosiert wurden.

Man erhielt eine stabile, koagulatfreie Dispersion mit einer mittleren Teilchengröße (Gewichtsmittel) von 865 nm, die bei einem Festkörpergehalt von 51.1 % eine Viskosität (Brookfield-Viskosimeter, 20°C, 20 Upm) von 2450 mPas aufwies.

Alle anderen Maßnahmen zur Herstellung des Dispersionspulvers entsprachen Beispiel 1.

### Beispiel 8:

Die Herstellung der Dispersion erfolgte analog Beispiel 1, wobei 3.5 Stunden nach Polymerisationsbeginn (87 % Monomerumsatz) 315 g Di-iso-propylfumarat (anstatt Butylacrylat) innerhalb 30 min zudosiert wurden.

Man erhielt eine stabile, koagulatfreie Dispersion mit einer mittleren Teilchengröße (Gewichtsmittel) von 564 nm, die bei einem Festkörpergehalt von 51.3 % eine Viskosität (Brookfield-Viskosimeter, 20°C, 20 Upm) von 4210 mPas aufwies.

Alle anderen Maßnahmen zur Herstellung des Dispersionspulvers entsprachen Beispiel 1.

### Beispiel 9:

Die Herstellung der Dispersion erfolgte analog Beispiel 1, wobei 3.5 Stunden nach Polymerisationsbeginn (87 % Monomerumsatz) 315 g Diethylfumarat (anstatt Butylacrylat) innerhalb 30 min zudosiert wurden.

Man erhielt eine stabile, koagulatfreie Dispersion mit einer mittleren Teilchengröße (Gewichtsmittel) von 652 nm, die bei einem Festkörpergehalt von 52.1 % eine Viskosität (Brookfield-Viskosimeter, 20°C, 20 Upm) von 3750 mPas aufwies.

Alle anderen Maßnahmen zur Herstellung des Dispersionspulvers entsprachen Beispiel 1.

### Vergleichsbeispiel 10:

Die Herstellung der Dispersion erfolgte analog Beispiel 1, wobei 3.5 Stunden nach Polymerisationsbeginn (87 % Monomerumsatz) 315 g Fumarsäuremonoethylester (anstatt Butylacrylat) innerhalb 30 min zudosiert wurden.

Man erhielt eine stabile, koagulatfreie Dispersion mit einer mittleren Teilchengröße (Gewichtsmittel) von 856 nm, die bei einem Festkörpergehalt von 51.1 % eine Viskosität (Brookfield-Viskosimeter, 20°C, 20 Upm) von 4750 mPas aufwies.

Alle anderen Maßnahmen zur Herstellung des Dispersionspulvers entsprachen Beispiel 1.

### Vergleichsbeispiel 11:

Die Herstellung der Dispersion erfolgte analog Beispiel 1, wobei auf die Zugabe von Butylacrylat verzichtet wurde.

Man erhielt eine stabile, koagulatfreie Dispersion mit einer mittleren Teilchengröße (Gewichtsmittel) von 489 nm, die bei einem Festkörpergehalt von 51.3 % eine Viskosität (Brookfield-Viskosimeter, 20°C, 20 Upm) von 3970 mPas aufwies.

Alle anderen Maßnahmen zur Herstellung des Dispersionspulvers entsprachen Beispiel 1.

### Prüfung der Polymerpulver:

Beurteilung des Geruchs an Dispersionsfilmen von Redispersionen der Dispersionspulver

Zur Herstellung der Filme wurde durch Redispergieren der hergestellten Dispersionspulver in Wasser eine ca. 30 %-ige Dispersion erzeugt. Als Referenzsubstanz diente eine 30 %-ige wässrige Redispersion des Dispersionspulver aus dem Vergleichsbeispiel.

Die Dispersionen wurden zur Erzeugung von Filmen auf eine Silikonkautschukplatte gegossen und anschließend 24 Stunden bei 23°C getrocknet. Die so erhaltenen Filme vom Format 15 cm x 10 cm wurden in eine auf 75°C vorgeheizte 250ml-Weithalsglasflasche mit Schraubdeckel gefüllt und 5 Minuten in einen auf 75°C geheizten Trockenschrank gestellt. Anschließend ließ man auf Raumtemperatur abkühlen und den Geruch von acht Testpersonen anhand einer Notenskala von 1 bis 6 (Geruchsintensität) beurteilen. Die Ergebnisse der Geruchsprüfung sind in Tabelle 1 wiedergegeben:

**Tabelle l:**

| Ergebnisse der Geruchsprüfung | | | | | | | | | | | |
|---|---|---|---|---|---|---|---|---|---|---|---|
| Beispiel | 1 | 2 | 3 | 4 | 5 | V6 | V7 | 8 | 9 | V10 | V11 |
| Intensität => | | | | | | | | | | | |
| Testperson 1 | 1 | 4 | 2 | 1 | 3 | 4 | 3 | 3 | 3 | 5 | 6 |
| Testperson 2 | 2 | 3 | 3 | 2 | 2 | 5 | 3 | 3 | 3 | 6 | 6 |
| Testperson 3 | 1 | 3 | 2 | 2 | 3 | 5 | 4 | 1 | 4 | 4 | 6 |
| Testperson 4 | 1 | 4 | 4 | 1 | 4 | 2 | 3 | 3 | 3 | 5 | 5 |
| Testperson 5 | 1 | 5 | 2 | 3 | 3 | 6 | 5 | 2 | 4 | 6 | 6 |
| Testperson 6 | 2 | 3 | 3 | 1 | 2 | 5 | 3 | 1 | 2 | 4 | 4 |
| Testperson 7 | 1 | 2 | 2 | 2 | 3 | 4 | 3 | 2 | 4 | 5 | 6 |
| Testperson 8 | 2 | 5 | 3 | 1 | 2 | 3 | 4 | 3 | 3 | 4 | 6 |

Die Ergebnisse von Tabelle 1 zeigen, daß mit der erfindungsgemäßen Vorgehensweise zur Desodorierung von Polymerdispersionen und Dispersionspulver eine deutliche Verminderung der Geruchsbelästigung erhalten wird.

### Bestimmung des Absitzverhaltens der Pulver

### (Röhrenabsitz):

Zur Bestimmung des Absitzverhaltens wurden jeweils 50 g des Dispersionspulvers in 50 ml Wasser redispergiert, danach auf 0.5 % Festgehalt verdünnt und die Absitzhöhe an Feststoff von 100 ml dieser Redispersion in eine graduierte Röhre gefüllt und das Absetzen nach 1 Stunde und 24 Stunden gemessen. Die Testergebnisse sind in Tabelle 2 zusammengefaßt.

### Bestimmung der Blockfestigkeit:

Zur Bestimmung der Blockfestigkeit wurde das Dispersionspulver in ein Eisenrohr mit Verschraubung gefüllt und danach mit einem Metallstempel belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulver bestimmt. Die Blockstabilität wurde wie folgt klassifiziert:
1 = sehr gute Blockstabilität
2 = gute Blockstabilität
3 = befriedigende Blockstabilität
4 = nicht blockstabil, Pulver nach Zerdrücken nicht mehr rieselfähig.

Die Prüfergebnisse sind in Tabelle 2 zusammengefaßt.

**Tabelle 2:**

| Beispiel | Röhrenabsitz 1 h/24 h [cm] | Blockfestigkeit |
|---|---|---|
| 1 | 0.1 / 0.5 | 1 |
| 2 | 0.1 / 0.6 | 1 |
| 3 | 0.2 / 0.8 | 2 |
| 4 | 0.6 / 1.3 | 3 |
| 5 | 0.2 / 0.6 | 1 |
| V 6 | 0.1 / 0.3 | 2 |
| V 7 | 0.1 / 0.4 | 1 |
| 8 | 0.5 / 0.9 | 2 |
| 9 | 0.6 / 1.3 | 2 |
| V 10 | 0.3 / 0.9 | 2 |
| V 11 | 0.1 / 0.5 | 1 |

Die Ergebnisse in Tabelle 2 zeigen, daß im allgemeinen die Pulverqualität durch die desodorierende Behandlung nicht in Mitleidenschaft gezogen wird.

## Patentansprüche

1. Verfahren zur Minderung der Geruchsemission wässriger Schutzkolloid-stabilisierter Vinylaromat-1,3-Dien-Copolymerisatdispersionen und daraus durch Trocknung erhältlicher Redispersionspulver durch Emulsionspolymerisation eines Gemisches enthaltend mindestens einen Vinylaromaten und mindestens ein 1,3-Dien in Gegenwart von einem oder mehreren Schutzkolloiden und gegebenenfalls Trocknung der damit erhaltenen Polymerdispersion, **dadurch gekennzeichnet, daß** gegen Ende der Polymerisation, wenn der Gesamtgehalt der wässrigen Polymerisatdispersion an freien Monomeren im Bereich > 0 bis ≤ 20 Gew.-% liegt, 0.01 bis 15.0 Gew.-% ein oder mehrere Monomere aus der Gruppe der verzweigten oder unverzweigten Alkylester mit 1 bis 8 C-Atomen im Alkylrest von einfach ungesättigten Mono- oder Dicarbonsäuren zugegeben werden, wobei die Angaben in Gew.-% jeweils auf den Polymerisatgehalt der Dispersion bezogen sind.

2. Verfahren nach Anspruch 1, **dadurch gekennzeichnet, daß** ein oder mehrere Alkylester der Acrylsäure, Methacrylsäure, Fumarsäure, Maleinsäure oder Itaconsäure zugegeben werden.

3. Verfahren nach Anspruch 1, **dadurch gekennzeichnet, daß** ein oder mehrere Ester aus der Gruppe umfassend Methylmethacrylat, Methylacrylat, n-Butylmethacrylat, n-Butylacrylat, Ethylmethacrylat, Ethylacrylat, 2-Ethylhexylmethacrylat, 2-Ethylhexylacrylat, Di-iso-Propylfumarat, Diethylfumarat zugegeben werden.

4. Verfahren nach Anspruch 1 bis 3, **dadurch gekennzeichnet, daß** 20 bis 80 Gew.-% Styrol und 20 bis 80 Gew.-% 1,3-Butadien, gegebenenfalls in Gegenwart weiterer Monomere, copolymerisiert werden.

5. Wässrige, Schutzkolloid-stabilisierte Vinylaromat-1,3-Dien-Copolymerisatdispersionen mit verringerter Geruchsemission erhältlich nach einem der Verfahren gemäß Anspruch 1 bis 4.

6. Redispersionspulver auf der Basis von Schutzkolloid-stabilisierten Vinylaromat-1,3-Dien-Copolymerisaten erhältlich nach einem der Verfahren gemäß Anspruch 1 bis 4.

7. Verwendung der Verfahrensprodukte gemäß Anspruch 1 bis 4 als Rezepturbestandteil in Verbindung mit anorganischen, hydraulisch abbindenden Bindemitteln in Bauklebern, Putzen, Spachtelmassen, Fußbodenspachtelmassen, Fugenmörtel, Gips und Farben.

8. Verwendung der Verfahrensprodukte gemäß Anspruch 1 bis 4 als Alleinbindemittel für Beschichtungsmittel.

9. Verwendung der Verfahrensprodukte gemäß Anspruch 1 bis 4 als Klebemittel.

10. Verwendung der Verfahrensprodukte gemäß Anspruch 1 bis 4 als Beschichtungs- und Bindemittel für Textilien und Papier.

## Claims

1. Process for reducing the odour emission of aqueous protective-colloid-stabilized vinylaromatic-1,3-diene copolymer dispersions and of redispersion powders obtainable therefrom by drying, by emulsion polymerization of a mixture comprising at least one vinylaromatic and at least one 1,3-diene in the presence of one or more protective colloids and, if desired, drying the resultant polymer dispersion, which comprises, towards the end of the polymerization, when the total free monomer content of the aqueous polymer dispersion is from 0 to 20% by weight, adding from 0.01 to 15.0% by weight of one or more monomers selected from the class consisting of branched or unbranched alkyl esters, having from 1 to 8 carbon atoms in the alkyl radical, of monounsaturated mono- or dicarboxylic acids, where the data in % by weight are in each case based on the polymer content of the dispersion.

2. Process according to Claim 1, **characterized in that** one or more alkyl esters of acrylic acid, methacrylic acid, fumaric acid, maleic acid or itaconic acid are added.

3. Process according to Claim 1, **characterized in that** one or more esters selected from the class consisting of methyl methacrylate, methyl acrylate, n-butyl methacrylate, n-butyl acrylate, ethyl methacrylate, ethyl acrylate, 2-ethylhexyl methacrylate, 2-ethylhexyl acrylate, diisopropyl fumarate and diethyl fumarate are added.

4. Process according to any of Claims 1 to 3, **characterized in that** from 20 to 80% by weight of styrene and from 20 to 80% by weight of 1,3-butadiene are copolymerized, if desired in the presence of other monomers.

5. Aqueous, protective-colloid-stabilized vinyl-aromatic-1,3-diene copolymer dispersions with reduced odour emission obtainable by one of the processes according to any of Claims 1 to 4.

6. Redispersion powder based on protective-colloid-stabilized vinylaromatic-1,3-diene copolymers obtainable by one of the processes according to any of Claims 1 to 4.

7. Use of the products of the processes according to any of Claims 1 to 4 as a formulation constituent in combination with inorganic, hydraulically setting binders in construction adhesives, renders, troweling compositions, floor-filling compositions, jointing mortar, plaster or paints.

8. Use of the products of the processes according to any of Claims 1 to 4 as sole binders for coating compositions.

9. Use of the products of the processes according to any of Claims 1 to 4 as adhesives.

10. Use of the products of the processes according to any of Claims 1 to 4 as coating compositions or binders for textiles or paper.

## Revendications

1. Procédé pour la réduction de l'émission d'odeur de dispersions aqueuses de copolymères composé vinylaromatique/1,3-diène stabilisées avec des colloïdes protecteurs et de poudres redispersables pouvant être obtenues à partir de celles-ci par séchage, par polymérisation en émulsion d'un mélange contenant au moins un composé vinylaromatique et au moins un 1,3-diène en présence d'un ou plusieurs colloïdes protecteurs et éventuellement séchage de la dispersion de polymère ainsi obtenue, **caractérisé en ce que** vers la fin de la polymérisation, lorsque la teneur totale en monomères libres de la dispersion aqueuse de polymère se situe dans la plage allant de > 0 à • 20 % en poids, on ajoute de 0,01 à 15,0 % en poids d'un ou plusieurs monomères choisis dans le groupe des esters alkyliques ramifiés ou non ramifiés, ayant de 1 à 8 atomes de carbone dans le radical alkyle, d'acides mono- ou dicarboxyliques mono-insaturés, les données en % en poids étant dans chaque cas par rapport à la teneur en polymère de la dispersion.

2. Procédé selon la revendication 1, **caractérisé en ce qu'**on ajoute un ou plusieurs esters alkyliques de l'acide acrylique, l'acide méthacrylique, l'acide fumarique, l'acide maléique ou l'acide itaconique.

3. Procédé selon la revendication 1, **caractérisé en ce qu'**on ajoute un ou plusieurs esters choisis dans le groupe comprenant le méthacrylate de méthyle, l'acrylate de méthyle, le méthacrylate de n-butyle, l'acrylate de n-butyle, le méthacrylate d'éthyle, l'acrylate d'éthyle, le méthacrylate de 2-éthylhexyle, l'acrylate de 2-éthylhexyle, le fumarate de diisopropyle, le fumarate de diéthyle.

4. Procédé selon l'une quelconque des revendications 1 à 3, **caractérisé en ce que** de 20 à 80 % en poids de styrène et de 20 à 80 % en poids de 1,3-butadiène, éventuellement en présence d'autres monomères, sont copolymérisés.

5. Dispersions aqueuses de copolymères composé vinylaromatique/ 1,3-diène stabilisées avec des colloïdes, à émission réduite d'odeur, pouvant être obtenues selon l'un des procédés conformes à l'une quelconque des revendications 1 à 4.

6. Poudre redispersable à base de copolymères composé vinylaromatique/1,3-diène stabilisées avec des colloïdes protecteurs, pouvant être obtenue selon l'un des procédés conformes à l'une quelconque des revendications 1 à 4.

7. Utilisation des produits du procédé selon l'une quelconque des revendications 1 à 4, en tant que composant de formulation en relation avec des liants minéraux à prise hydraulique dans des colles pour le bâtiment, des enduits, des mastics, des mastics pour sols, des mortiers pour joints, le plâtre et des peintures.

8. Utilisation des produits du procédé selon l'une quelconque des revendications 1 à 4, en tant que liant unique pour des compositions de revêtement.

9. Utilisation des produits du procédé selon l'une quelconque des revendications 1 à 4, en tant que colle.

10. Utilisation des produits du procédé selon l'une quelconque des revendications 1 à 4, en tant que liant et produit d'enduction pour les textiles et le papier.
